# EUROPÄISCHE PATENTANMELDUNG

(11) **EP 4 821 364 A1**
(43) Veröffentlichungstag der Anmeldung: **14.10.2026**
(21) Anmeldenummer: 26169754.4
(22) Anmeldetag: 31.03.2026
(51) Int. Cl.: A23C 19/14, A01J 25/16, A23B 4/16, A23L 13/76

(54) **VERFAHREN UND VORRICHTUNG ZUR REIFUNG VON LEBENSMITTELN, SOWIE DEREN VERWENDUNG**

(30) Priorität: 10.04.2025 DE 102025114225
(71) Anmelder: Hochschule Anhalt, Körperschaft des öffentlichen Rechts, 06366 Köthen (DE); Rügenwalder Spezialitäten Plüntsch GmbH & Co. KG Bad Arolsen, 34454 Bad Arolsen (DE)
(72) Erfinder: Schnäckel, Wolfram, 06366 Köthen (DE); Micklisch, Ingo, 06366 Köthen (DE); Plüntsch, Elmar, 34454 Bad Arolsen (DE); Plüntsch, Julia, 34454 Bad Arolsen (DE)
(74) Vertreter: Kailuweit & Uhlemann Patentanwälte Partnerschaft mbB

(57) **Zusammenfassung**

Die Erfindung betrifft ein Verfahren und eine Vorrichtung zur Reifung von Lebensmitteln, sowie deren Verwendung. Dabei werden zu reifende Lebensmittel in einer Reifungskammer bereitgestellt, und zumindest teilweise das Gewicht der zu reifenden Lebensmittel über die Zeit und die Temperatur innerhalb der Reifungskammer erfasst und an eine Steuerungs- und/oder Regelungseinrichtung übermittelt, und das erfasste Gewicht mit einer vorgegebenen Gewichts-Zeit-Kurve oder Gewichtsverlust-Zeit-Kurve als Prozent über die Zeit und die erfasste Temperatur mit einer vorgegebenen Temperatur-Zeit-Kurve verglichen, und anhand der Abweichungen zwischen dem erfassten Gewicht und der vorgegebenen Gewichts-Zeit-Kurve oder Gewichtsverlust-Zeit-Kurve eine Be- und Entfeuchtungseinrichtung und anhand der Abweichungen zwischen der erfassten Temperatur und der vorgegebenen Temperatur-Zeit-Kurve die Temperatur innerhalb der Reifungskammer gesteuert und/oder geregelt.

## Beschreibung

Die Erfindung betrifft ein Verfahren und eine Vorrichtung zur Reifung von Lebensmitteln, sowie deren Verwendung.

Das Reifen von Lebensmitteln spielt eine wichtige Rolle bei der Herstellung von Lebensmitteln, wie Käse, Schinken, Rohwurst oder anderen fermentierten Lebensmitteln. Traditionell werden Reifeprozesse derartiger Lebensmittel über die Gewährleistung der Einstellung einer spezifischen Temperatur für definierte Zeitintervalle und einen definierten intervallmäßig regulierten Luftfeuchtigkeitsverlauf gesteuert. Die Fertigstellung der Produkte wird dabei über eine vorgegebene Reifezeit oder ein vorgegebenes Endgewicht der Produkte definiert. Aktuelle Probleme sind dabei, dass entweder das Zielgewicht nicht in der vorgegebenen Zeit erreicht und somit eine Verlängerung des Reifeprozesses nötig wird oder dass das Zielgewicht zu früh erreicht wird und damit der Reifeprozess mikrobiologisch noch nicht abgeschlossen ist und mit Qualitätseinbußen im fertigen Produkt zu rechnen ist.

DE 10 2010 002 951 A1 beschreibt ein Verfahren und eine Anlage zum Behandeln von Lebensmittelprodukten. Dabei wird ein aufbereitetes Gasgemisch in eine verschließbare Behandlungskammer ein- und ausgeleitet und in der Behandlungskammer zeitgleich die Temperatur geregelt und ein gegenüber dem Umgebungsdruck verringerter Unterdruck eingeregelt. Ein Sensor erfasst den aktuellen Unterdruck und übermittelt diesen an eine Steuerungseinrichtung, so dass der Zustrom des eingeleiteten und/oder ausgeleiteten Gasgemisches anhand des Abgleichs mit einem Sollwert durch die Steuerung eingestellt wird. Nachteilig daran ist, die aufwendige und damit kostenintensive technische Umsetzung hinsichtlich der Bereitstellung des Gasgemisches oder aber der Realisierung eines Unterdrucks während der Prozesszeit (bedingt geschlossenes System).

Aus der DE 37 21 982 A1 ist ein Verfahren und eine Vorrichtung zur Steuerung des Trocknungsverlaufs von Nahrungsmitteln bekannt. Dabei wird dem zu behandelnden Nahrungsmittel in einer Behandlungskammer konditionierte Luft zugeführt und das Gewicht der Nahrungsmittel stichprobenartig kontinuierlich gemessen. Der Luftdurchsatz im Behandlungsraum wird in Abhängigkeit der aus den Messwerten ermittelten Gewichtsabnahme pro Zeiteinheit geregelt. Nachteilig ist dabei, dass das Gewicht nur stichprobenartig gemessen wird und damit Abweichungen von einem optimalen Reifungsverlauf nicht ausgeschlossen sind. Eine Steuerung des Prozesses ausschließlich durch Veränderung des Luftdurchsatzes birgt bei Abweichungen der Temperatur und/oder der Feuchtigkeit ebenfalls praktische Risiken im Reifungsverlauf.

Aus der DE 33 19 528 A ist ein Verfahren zur Reifung und Trocknung von Wurst oder ähnlichen Lebensmitteln bekannt, bei dem kontinuierlich der pH-Wert und/oder der Gewichtsverlust gemessen und in Abhängigkeit davon die Temperatur, Luftfeuchtigkeit und/oder der Durchsatz der Luft kontinuierlich gesteuert werden.

Die EP 2 154 949 B9 offenbart ein Verfahren zum Überwachen und Modellieren der Entwicklung einer Käsemasse während der Reifung, wobei mit geeigneten Sensoren die Käsemasse, die relative Luftfeuchtigkeit, die Temperatur, sowie die CO₂ und/oder O₂-Konzentration bestimmt werden und die Entwicklung der Käsemasse anhand spezifischer Gleichungen modelliert wird und die Entwicklung der Käsemasse bzw. der mittleren Temperatur der Käseoberfläche jeweils Funktionen der Zeit sind.

KR 10 2586719 B1 beschreibt ein Verfahren zur biochemischen Reifung von Fleisch, wobei Informationen zum aktuellen Zustand des Fleisches, bspw. dessen Gewicht, erfasst und analysiert werden, um einen aktuellen Reifegrad zu bestimmen. Der aktuelle Reifegrad wird mit einem voreingestellten Reifegrad verglichen und Parameter des Reifungsvorgangs werden gesteuert.

Aufgabe ist es daher, ein Verfahren und eine Vorrichtung bereitzustellen, welche die Nachteile des Standes der Technik überwindet, Fehlreifungen und damit Fehlchargen vermeidet, Qualitätsschwankungen minimiert und eine effizientere ressourcensparende Reifung von Lebensmitteln ermöglicht.

Erfindungsgemäß wird die Aufgabe durch ein Verfahren, eine Vorrichtung und ein Computerprogrammprodukt gemäß den unabhängigen Ansprüchen gelöst. Vorteilhafte Ausgestaltungen der Erfindung sind in den abhängigen Ansprüchen angegeben. Weiterhin wird die Aufgabe gelöst durch die Verwendung des erfindungsgemäßen Verfahrens bzw. der erfindungsgemäßen Vorrichtung.

Ein erster Aspekt der Erfindung betrifft ein Verfahren zur Reifung von Lebensmitteln, umfassend mindestens die Schritte:
a) Bereitstellen zu reifender Lebensmittel in einer Reifungskammer und Vorgeben einer Gewichts-Zeit-Kurve, einer Gewichtsverlust-Zeit-Kurve und/oder einer Temperatur-Zeit-Kurve eines durchzuführenden Reifungsprozesses, und
b) Erfassen zumindest teilweise eines Gewichts der zu reifenden Lebensmittel über die Zeit und/oder einer Temperatur innerhalb der Reifungskammer und deren Übermittlung an eine Steuerungs- und/oder Regelungseinrichtung, und
c) Vergleichen des erfassten Gewichts mit der vorgegebenen Gewichts-Zeit-Kurve oder Gewichtsverlust-Zeit-Kurve und/oder der erfassten Temperatur mit der vorgegebenen Temperatur-Zeit-Kurve, um Abweichungen zwischen dem erfassten Gewicht und/oder der erfassten Temperatur und der vorgegebenen Gewichts-Zeit-Kurve, Gewichtsverlust-Zeit-Kurve und/oder Temperatur-Zeit-Kurve festzustellen, und
d) Steuern und/oder Regeln einer Be- und Entfeuchtungseinrichtung zur Zu- und Abführung eines Reifungsmediums anhand der Abweichungen zwischen dem erfassten Gewicht und der vorgegebenen Gewichts-Zeit-Kurve oder Gewichtsverlust-Zeit-Kurve und/oder der Temperatur innerhalb der Reifungskammer anhand der Abweichungen zwischen der erfassten Temperatur und der vorgegebenen Temperatur-Zeit-Kurve.

Ausführungsformen der Erfindung betreffen ein Verfahren zur Reifung von Lebensmitteln, bei dem zu reifende Lebensmittel in einer Reifungskammer bereitgestellt werden, und zumindest teilweise das Gewicht der zu reifenden Lebensmittel über die Zeit und die Temperatur innerhalb der Reifungskammer erfasst und an eine Steuerungs- und/oder Regelungseinrichtung übermittelt werden, und das erfasste Gewicht mit einer vorgegebenen Gewichts-Zeit-Kurve oder Gewichtsverlust-Zeit-Kurve und die erfasste Temperatur mit einer vorgegebenen Temperatur-Zeit-Kurve verglichen, und anhand der Abweichungen zwischen dem erfassten Gewicht und der vorgegebenen Gewichts-Zeit-Kurve oder Gewichtsverlust-Zeit-Kurve eine Be- und Entfeuchtungseinrichtung und anhand der Abweichungen zwischen der erfassten Temperatur und der vorgegebenen Temperatur-Zeit-Kurve die Temperatur innerhalb der Reifungskammer gesteuert und/oder geregelt werden.

Vorteilhaft ermöglicht das erfindungsgemäße Verfahren die Steuerung des mit einem Gewichtsverlust einhergehenden Reifeprozesses von Lebensmitteln. Ebenfalls vorteilhaft werden Diskontinuitäten im Reifungsprozess ausgeschlossen. Weiterhin vorteilhaft werden Qualitätsschwankungen infolge von fehlerhaften Reifungsprozessen reduziert oder vermieden. Auch kann vorteilhaft die Reifezeit der zu reifenden Lebensmittel reduziert werden, was zu einer Erhöhung des Produktionsdurchsatzes führt. Das erfindungsgemäße Verfahren ermöglicht weiterhin die kontinuierliche Nachführung der Reifungsparameter, wie Temperatur und Gewicht, so dass abrupte Änderungen der Temperatur vermieden und damit auch Energie eingespart werden kann. Weiterhin vorteilhaft werden mit dem erfindungsgemäßen Verfahren manuelle Eingriffe in den Reifungsprozess zur Einstellung von Reifungsparametern vermieden. Weiterhin vorteilhaft ermöglicht ein derartiges Verfahren ein vorherberechenbares Ende des Reifungsprozesses.

Zu reifende Lebensmittel im Sinne der Erfindung umfassen eine Mehrzahl einzelner Produkte einer Produktkategorie, wobei die Produktkategorie ausgewählt ist aus Schinken, Käse, Rohwurst oder anderen zu reifenden Lebensmitteln. In Ausführungsformen sind die zu reifenden Lebensmittel Rohwürste, jeweils eine Mehrzahl einzelner Rohwürste, wobei die einzelnen Rohwürste in ihrer Art gleich sind. In ihrer Art gleich meint dabei, dass die einzelnen Rohwürste in ihrer Rezeptur, Masse und/oder Rohstoffzusammensetzung gleich sind bzw. im Rahmen produktionsüblicher Schwankungen gleich sind.

Eine Reifungskammer im Sinne der Erfindung meint eine abschließbare von der Umgebung allseitig abgegrenzte Kammer, in die die zu reifenden Lebensmittel für die Reifung eingebracht werden. Dabei werden bspw. Rohwürste oder Schinken in verschiedenen Ebenen hängend auf einem Gestell hängend oder in verschiedenen Ebenen auf einem Gestell liegend in die Reifungskammer eingebracht. Derartige Reifungskammern sind üblicherweise aus Edelstahl ausgebildet und ermöglichen die Aufnahme eines Gestells mit darin hängenden und/oder liegenden einzelnen zu reifenden Produkten und die Einstellung der Temperatur und/oder der Luftfeuchtigkeit.

Eine zumindest teilweise Bestimmung des Gewichts der zu reifenden Lebensmittel meint im Sinne der Erfindung, dass das Gewicht mindestens eines Produkts innerhalb der Mehrzahl der Produkte bestimmt wird. Je nach Größe der Reifungskammer kann es vorteilhaft sein, das Gewicht mehrerer einzelner Produkte der Mehrzahl der Produkte zu bestimmen. In Ausführungsformen wird aus dem erfassten Gewicht der Gewichtsverlust in Prozent des Ausgangsgewichts bestimmt.

In Ausführungsformen erfolgt Schritt b) kontinuierlich über die gesamte Zeit des Reifungsprozesses. In Ausführungsformen erfolgt die Erfassung in Schritt b) alle 1 bis 30 Sekunden, bevorzugt alle 1 bis 10 Sekunden, besonders bevorzugt alle 5 Sekunden.

Das Vorgeben einer Gewichts-Zeit-Kurve, einer Gewichtsverlust-Zeit-Kurve und/oder einer Temperatur-Zeit-Kurve eines Reifungsprozesses meint, dass für eine bestimmte Produktkategorie ein Reifungsprozess als Verlauf des Gewichts der zu reifenden Produkte über die Zeit, des Gewichtsverlusts der zu reifenden Produkte über die Zeit und/oder der Temperatur innerhalb der Reifungskammer über die Zeit vorgegeben wird. Diese Kurven werden aus konventionell durchgeführten, auf Erfahrungen basierenden Reifungsprozessen abgeleitet, als Funktionsgleichungen dargestellt und dienen als Steuerungs- und/oder Regelungsgrundlage, d.h. als Soll-Werte. Der Gewichtsverlust der zu reifenden Produkte wird dabei jeweils in Relation zum Startgewicht eines Produkts bestimmt.

In Ausführungsformen wird in Schritt a) eine Feuchtigkeits-Zeit-Kurve vorgegeben.

Das erfasste Gewicht der zu reifenden Lebensmittel und die erfasste Temperatur innerhalb der Reifungskammer stellen die Ist-Werte dar, die über die Beeinflussung von Parametern der Be- und Entfeuchtungseinrichtung und/oder der Reifungskammer gesteuert und/oder oder geregelt werden.

Steuern und/oder Regeln der Be- und Entfeuchtungseinrichtung im Sinne der Erfindung meint, dass die Be- und Entfeuchtungsleistung der Be- und Entfeuchtungseinrichtung derart beeinflusst wird, um die relative Feuchtigkeit des Reifungsmediums innerhalb der Reifungskammer kontrolliert zu verändern.

In Ausführungsformen wird die Be- und Entfeuchtungsleistung beeinflusst, indem die Leistung einer Kondensationseinheit der Be- und Entfeuchtungseinrichtung gesteuert und/oder geregelt wird, und damit die relative Feuchtigkeit des Reifungsmediums innerhalb der Reifungskammer verändert wird.

Wird in Schritt c) eine Abweichung zwischen der erfassten Gewichtsverlust-Zeit-Kurve und der vorgegebenen Gewichtsverlust-Zeit-Kurve festgestellt, so dass bspw. der erfasste Gewichtsverlust zu einer bestimmten Zeit niedriger als der vorgegebene Gewichtsverlust ist, so wird die Be- und Entfeuchtungsleistung, insbesondere der Kondensationseinheit der Be- und Entfeuchtungseinrichtung erhöht. Dadurch wird der Transport der Wärme aus der Reifungskammer nach außen intensiviert und die Temperatur an der Kondensationseinheit sinkt. In Folge davon schlägt sich an der Oberfläche der Kondensationseinheit mehr Wasser aus dem Reifungsmedium in der Reifungskammer nieder. Dieses Wasser kann über einen Schlauch nach außen, aus der Reifungskammer heraus, abgeführt werden. Mit der damit abgesunkenen relativen Feuchtigkeit des Reifungsmediums innerhalb der Reifungskammer wird die Flüssigkeitsabgabe aus den zu reifenden Lebensmitteln an die Oberfläche dieser, sowie an das umgebende Reifungsmedium intensiviert, und das Gewicht der zu reifenden Lebensmittel reduziert sich. Als Folge davon wird die Abweichung zwischen dem erfassten Gewichtsverlust und dem vorgegebenen Gewichtsverlust minimiert und eine Angleichung an die vorgegebene Gewichtsverlust-Zeit-Kurve erreicht.

Steuern und/oder Regeln der Temperatur innerhalb der Reifungskammer im Sinne der Erfindung meint, dass die Temperatur innerhalb der Reifungskammer kontrolliert verändert wird. Dazu ist es vorteilhaft, dass eine Vorrichtung zu Reifung von Lebensmitteln vorteilhaft eine Temperiervorrichtung zur Beeinflussung der Temperatur innerhalb der Reifungskammer aufweist, insbesondere bestehend aus Heiz- und/oder Kühlelementen.

Wird in Schritt c) eine Abweichung zwischen der erfassten Temperatur-Zeit-Kurve und der vorgegebenen Temperatur-Zeit-Kurve festgestellt, so dass bspw. die erfasste Temperatur innerhalb der Reifungskammer zu einer bestimmten Zeit niedriger als die vorgegebene Temperatur ist, so wird die Leistung, insbesondere die Heizleistung, einer Temperiervorrichtung erhöht, um die Temperatur innerhalb der Reifungskammer zu erhöhen. Als Folge davon wird die Abweichung zwischen der erfassten Temperatur und der vorgegebenen Temperatur minimiert und eine Angleichung an die vorgegebene Temperatur-Zeit-Kurve erreicht.

Wird in Schritt c) eine Abweichung zwischen der erfassten Temperatur-Zeit-Kurve und der vorgegebenen Temperatur-Zeit-Kurve festgestellt, so dass bspw. die erfasste Temperatur innerhalb der Reifungskammer zu einer bestimmten Zeit höher als die vorgegebene Temperatur ist, so wird die Leistung, insbesondere die Kühlleistung, einer Temperiervorrichtung erhöht, um die Temperatur innerhalb der Reifungskammer zu erniedrigen. Als Folge davon wird die Abweichung zwischen der erfassten Temperatur und der vorgegebenen Temperatur minimiert und eine Angleichung an die vorgegebene Temperatur-Zeit-Kurve erreicht.

In Ausführungsformen des Verfahrens werden zu reifende Lebensmittel in einer Reifungskammer bereitgestellt, zumindest teilweise das Gewicht der zu reifenden Lebensmittel über die Zeit und die Temperatur innerhalb der Reifungskammer erfasst und an eine Regelungseinrichtung übermittelt, und das erfasste Gewicht mit einer vorgegebenen Gewichts-Zeit-Kurve oder Gewichtsverlust-Zeit-Kurve und die erfasste Temperatur mit einer vorgegebenen Temperatur-Zeit-Kurve verglichen, und anhand der Abweichungen zwischen dem erfassten Gewicht und der vorgegebenen Gewichts-Zeit-Kurve oder Gewichtsverlust-Zeit-Kurve eine Be- und Entfeuchtungseinrichtung und anhand der Abweichungen zwischen der erfassten Temperatur und der vorgegebenen Temperatur-Zeit-Kurve die Temperatur innerhalb der Reifungskammer geregelt.

Vorteilhaft erfolgt dadurch ein kontinuierlicher Abgleich der Soll- und Ist-Werte, so dass sichergestellt wird, dass der Soll-Wert - die vorgegebene Gewichts-Zeit- oder Gewichtsverlust-Zeit- bzw. Temperatur-Zeit-Kurve - erreicht. Sollwerte sind dabei das durch die Gewichts-Zeit- oder Gewichtsverlust-Zeit- bzw. Temperatur-Zeit-Kurve vorgegebene Gewicht oder Gewichtsverlust bzw. Temperatur. Ist-Werte sind die erfassten Werte für Gewicht, Temperatur bzw. der aus dem erfassten Gewicht bestimmte Gewichtsverlust.

In Ausführungsformen des Verfahrens werden zu reifende Lebensmittel in einer Reifungskammer bereitgestellt, zumindest teilweise das Gewicht der zu reifenden Lebensmittel über die Zeit und die Temperatur innerhalb der Reifungskammer erfasst und an eine Steuerungseinrichtung übermittelt, und das erfasste Gewicht mit einer vorgegebenen Gewichts-Zeit-Kurve oder Gewichtsverlust-Zeit-Kurve und die erfasste Temperatur mit einer vorgegebenen Temperatur-Zeit-Kurve verglichen, und anhand der Abweichungen zwischen dem erfassten Gewicht und der vorgegebenen Gewichts-Zeit-Kurve oder Gewichtsverlust-Zeit-Kurve eine Be- und Entfeuchtungseinrichtung und anhand der Abweichungen zwischen der erfassten Temperatur und der vorgegebenen Temperatur-Zeit-Kurve die Temperatur innerhalb der Reifungskammer gesteuert.

In Ausführungsformen wird in Schritt b) das Gewicht der zu reifenden Lebensmittel an verschiedenen Positionen innerhalb der Reifungskammer erfasst.

Vorteilhaft werden dabei technisch bedingte Inhomogenitäten in Abhängigkeit von der Position der zu reifenden Lebensmittel innerhalb der Reifungskammer und der Größe der Reifungskammer erfasst. Dabei wird das Gewicht jeweils eines einzelnen Produkts an einer Position innerhalb des Mehrzahl der Produkte erfasst, wobei mehrere Positionen erfasst werden. In Ausführungsformen wird das Gewicht der zu reifenden Lebensmittel an mindestens zwei Positionen innerhalb der Reifungskammer erfasst. Damit ist gemeint, dass das Gewicht einzelner Produkte an mindestens zwei unterschiedlichen Positionen innerhalb der Reifungskammer erfasst wird. Dies kann bspw. bei in unterschiedlichen Ebenen hängenden oder liegenden Produkten erfolgen.

In Ausführungsformen wird das Gewicht der zu reifenden Lebensmittel mittels Gewichtssensoren erfasst. Dabei wird für jedes Produkt, dessen Gewicht erfasst werden soll, ein Sensor genutzt. Für den Fachmann ist klar, dass die Sensoren, wie bspw. Gewichts-, Temperatur-, Feuchtigkeits- und/oder Strömungssensoren, mit einer definierten Genauigkeit arbeiten, stabil gegen WasserTemperatur, Feuchtigkeit, Säure und Rauch und auf Dauerbetrieb ausgelegt sein müssen. Ihre Datenerfassung wird durch keinen der o.g. Faktoren beeinflusst.

In Ausführungsformen wird aus den an verschiedenen Positionen bzw. an verschiedenen Produkten innerhalb der Reifungskammer erfassten Gewichten ein Mittelwert gebildet.

In Ausführungsformen werden in Schritt b) weiterhin Parameter der Be- und Entfeuchtungseinrichtung und/oder der Reifungskammer erfasst und an die Steuerungs- und/oder Regelungseinrichtung übermittelt.

In Ausführungsformen werden weiterhin Parameter der Be- und Entfeuchtungseinrichtung und/oder der Reifungskammer erfasst.

Vorteilhaft werden somit neben dem Gewicht einzelner Produkte weitere für den Reifungsprozess relevante Parameter erfasst. Derartige Parameter sind bspw. die Temperatur und/oder die Feuchtigkeit des durch die Be- und Entfeuchtungseinrichtung zugeführten bzw. abgeführten Reifungsmediums, die Temperatur und/oder Luftfeuchtigkeit innerhalb der Reifungskammer. Parameter der Be- und Entfeuchtungseinrichtung meint die Temperatur und/oder Feuchtigkeit des durch die Be- und Entfeuchtungseinrichtung zugeführten und abgeführten Reifungsmediums. Parameter der Reifungskammer meint die Temperatur und/oder Feuchtigkeit innerhalb der Reifungskammer.

Eine Be- und Entfeuchtungseinrichtung im Sinne der Erfindung meint eine Einrichtung, derart ausgebildet, ein Reifungsmedium einer Reifungskammer zuzuführen und aus dieser abzuführen und/oder eine aktive Be- oder Entfeuchtung des Reifungsmediums in der Reifungskammer zu realisieren.

Dazu weist die in Ausführungsformen Be- und Entfeuchtungseinrichtung vorteilhaft eine Zuführung auf, um ein Reifungsmedium der Reifungskammer zuzuführen, und eine Abführung, um ein Reifungsmedium aus der Reifungskammer abzuführen. Die Zu- und Abführungen können als Rohre oder Schläuche ausgebildet sein. In Ausführungsformen weist die Be- und Entfeuchtungseinrichtung weiterhin einen Ablauf zum Abführen kondensierter Feuchtigkeit aus der Reifungskammer während des Entfeuchtens auf.

Um eine aktive Entfeuchtung des Reifungsmediums zu gewährleisten, weist die Be- und Entfeuchtungseinrichtung in Ausführungsformen eine Kondensationseinheit auf. Die Kondensationseinheit kann ein Peltier-Element aufweisen, wobei durch die Steuerung und/oder Regelung der Leistung der Kondensationseinheit, insbesondere des Peltier-Elements dessen Temperatur beeinflusst und dadurch die Entfeuchtung des Reifungsmediums beeinflusst wird. Weiterhin meint eine Be- und Entfeuchtungseinrichtung eine Einrichtung, die zur Temperierung des Reifungsmediums vor dem Zuführen in die Reifungskammer ausgebildet ist. Dazu weist die Be- und Entfeuchtungseinrichtung vorteilhaft ein Heiz- und/oder Kühlaggregat auf.In Ausführungsformen werden die Temperatur und Feuchtigkeit des durch die Be- und Entfeuchtungseinrichtung zu- und abgeführten Reifungsmediums und/oder die Feuchtigkeit innerhalb der Reifungskammer erfasst.

Ein Reifungsmedium im Sinne der Erfindung meint jegliches gasförmige Medium, welches in eine Reifungskammer für zu reifende Lebensmittel eingebracht wird und die Reifung ermöglicht. Das Reifungsmedium umfasst Luft, ggf. mit unterschiedlicher Feuchtigkeit; Rauch, Dampf oder Mischungen daraus.

In Ausführungsformen ist das Reifungsmedium Luft. Luft meint dabei die außerhalb der Reifungskammer vorliegende Raumluft. Die Raumluft kann dabei konditioniert oder nicht konditioniert sein. Konditionieren meint die definierte Einstellung bspw. der Temperatur und/oder der Feuchtigkeit der Luft, bevor diese in die Reifungskammer geführt wird.

In Ausführungsformen erfolgt die Konditionierung der Luft vor der Zuführung in die Reifungskammer mittels der Be- und Entfeuchtungseinrichtung.

Vorteilhaft ist die Luft nicht konditioniert, d.h. die Eigenschaften der Raumluft, wie Feuchtigkeit und/oder Temperatur werden im Vorfeld der Zuführung in die Reifungskammer nicht eingestellt. Damit werden vorteilhaft Ressourcen zum Konditionieren der Raumluft eingespart.

In Ausführungsformen erfolgt in Schritt b) die Erfassung der Temperatur und/oder der Feuchtigkeit des der Reifungskammer zugeführten und/oder abgeführten Reifungsmediums mittels Messeinrichtungen. In Ausführungsformen erfolgt in Schritt b) die Erfassung der Temperatur und/oder Feuchtigkeit des Reifungsmediums innerhalb der Reifungskammer mittels Messeinrichtungen.

In Ausführungsformen wird die Temperatur des zu- und/oder abgeführten Reifungsmediums bzw. die Temperatur innerhalb der Reifungskammer mittels Temperatursensoren erfasst. In Ausführungsformen wird die Feuchtigkeit des zu- und/oder abgeführten Reifungsmediums bzw. die Feuchtigkeit innerhalb der Reifungskammer mittels Feuchtigkeitssensoren erfasst.

In Ausführungsformen wird in Schritt b) weiterhin die Geschwindigkeit des Reifungsmediums innerhalb der Reifungskammer erfasst und an die Steuerungs- und/oder Regelungseinrichtung übermittelt und in Schritt d) die Geschwindigkeit des Reifungsmediums innerhalb der Reifungskammer gesteuert und/oder geregelt.

In Ausführungsformen wird weiterhin die Geschwindigkeit des Reifungsmediums innerhalb der Reifungskammer erfasst und gesteuert und/oder geregelt.

Vorteilhaft werden dabei technisch bedingte Inhomogenitäten der Geschwindigkeit des Reifungsmediums innerhalb der Reifungskammer erfasst und gesteuert und/oder geregelt. Die Geschwindigkeit des innerhalb der Reifungskammer umgewälzten Reifungsmediums hat ebenfalls Einfluss auf den Reifungsprozess.

In Ausführungsformen wird die Geschwindigkeit des Reifungsmediums innerhalb der Reifungskammer mittels Strömungssensoren erfasst.

In Ausführungsformen wird die Geschwindigkeit des Reifungsmediums an verschiedenen Positionen innerhalb der Reifungskammer erfasst.

Die Geschwindigkeit des Reifungsmediums innerhalb der Reifungskammer im Sinne der Erfindung meint den innerhalb der Reifungskammer umgewälzten Volumenstrom des Reifungsmediums.

In Ausführungsformen wird in Schritt a) eine stetige Funktion, insbesondere eine polynomische Funktion 4. Ordnung als Gewichts-Zeit-Kurve oder Gewichtsverlust-Zeit-Kurve und als Temperatur-Zeit-Kurve vorgegeben.

Vorteilhaft wird anhand der vorgegebenen Kurven ein idealisierter Reifungsprozess vorgegeben. Die Gewichts-Zeit-Kurven oder Gewichtsverlust-Zeit-Kurve bzw. Temperatur-Zeit-Kurven werden jeweils für ein spezifisches zu reifendes Lebensmittel, bspw. eine Art einer Rohwurst, vorgegeben und definieren den Sollverlauf von Gewicht oder Gewichtsverlust bzw. Temperatur über die Zeit des Reifeprozesses. Ebenfalls vorteilhaft vermeiden derartige Funktionen abrupte Sprünge der Temperatur, des Gewichts oder des Gewichtsverlusts und erlauben eine bessere Steuerung und/oder Regelung während des Reifungsprozesses. Weiterhin vorteilhaft wird ggü. dem Stand der Technik und der Vorgabe von Intervallen die Reifezeit deutlich verkürzt, vorteilhaft um bis zu einem Drittel verkürzt.

In Ausführungsformen wird in Schritt a) die vorgegebene Gewichts-Zeit-Kurve oder Gewichtsverlust-Zeit-Kurve und/oder Temperatur-Zeit-Kurve gestaucht oder gestreckt. Vorteilhaft kann dadurch der Reifeprozess an den industriellen Produktionsablauf angepasst werden.

In Ausführungsformen kann die vorgegebene Gewichts-Zeit-Kurve oder Gewichtsverlust-Zeit-Kurve und/oder Temperatur-Zeit-Kurve um bis zu 1/3 oder auf 2/3 gestaucht oder bis auf 150 % gestreckt werden. Vorteilhaft kann dadurch die Reifezeit verkürzt oder verlängert werden und der Reifeprozess an vorgelagerte und/oder nachgelagerte Produktionsschritte für einen reibungslosen Produktionsablauf angepasst werden. Dabei erfolgt das Stauchen oder Strecken der Gewichts-Zeit-Kurve oder Gewichtsverlust-Zeit-Kurve und/oder Temperatur-Zeit-Kurve derart, dass die Funktionswerte der Maxima bzw. Minima der Kurven jeweils nicht signifikant verändert werden.

In Ausführungsformen werden weiterhin vor Beginn des Reifungsprozesses und/oder während des Reifeprozesses Wetterdaten bereitgestellt und aus den Wetterdaten eine Außentemperatur-Zeit-Kurve und/oder eine Außenfeuchtigkeits-Zeit-Kurve generiert. Anhand dieser Außentemperatur-Zeit-Kurve und/oder der Außenfeuchtigkeits-Zeit-Kurve wird unter Einbeziehung der in Schritt a) vorgegebenen Temperatur-Zeit-Kurve und/oder Feuchtigkeits-Zeit-Kurve die notwendige Heiz- oder Kühlleistung in Bezug auf das in die Reifekammer zugeführte Reifemedium und/oder die Reifekammer selbst sowie die notwendige Be- oder Entfeuchtungsleistung in Bezug auf das in die Reifekammer zugeführte Reifemedium ermittelt und die Be- und Entfeuchtungseinrichtung zur Zu- und Abführung des Reifungsmediums und/oder eine Temperiervorrichtung der Reifekammer gesteuert. Die Schritte b) bis d) werden selbstverständlich weiterhin ausgeführt, so dass die tatsächlichen Verhältnisse in der Reifekammer bzw. der tatsächliche Fortschritt des Reifeprozesses zur Nachsteuerung bzw. Regelung der Be- und Entfeuchtungseinrichtung bzw. der Temperiervorrichtung der Reifekammer genutzt werden. Die Temperiervorrichtung der Reifekammer besteht aus Heiz- und/oder Kühlelementen, vorteilhafterweise sowohl aus Heiz- als auch aus Kühlelementen, und ist geeignet, die Temperatur innerhalb der Reifekammer einzustellen.

Vorteilhaft ist dadurch die energie- und ressourceneffiziente Nutzung der Außenluft (auch Umgebungsluft) als Reifungsmedium mit den wetterbedingten Eigenschaften Temperatur und Luftfeuchtigkeit möglich. Dadurch könnte bspw. bei ausreichend hohen durch die Wetterdaten prognostizierten Temperaturen die Außenluft ohne zusätzliche Temperierung/Konditionierung der Reifungskammer zugeführt und damit Energiekosten einer evtl. Erwärmung des Reifungsmediums reduziert werden.

In Ausführungsformen werden die Wetterdaten kontinuierlich bereitgestellt. In Ausführungsformen werden die Wetterdaten alle 1 bis 120 Minuten, bevorzugt alle 1 bis 60 Minuten, besonders bevorzugt alle 1 bis 30 Minuten, ganz besonders bevorzugt alle 1 bis 10 Minuten bereitgestellt.

Ein weiterer Aspekt der Erfindung betrifft eine Vorrichtung zur Reifung von Lebensmitteln, mindestens aufweisend
i. eine verschließbare Reifungskammer,
ii. eine steuer- und/oder regelbare Be- und Entfeuchtungseinrichtung, ausgebildet zum Zu- und Abführen eines Reifungsmediums in die und aus der Reifungskammer und/oder zum Be- und Entfeuchten und Temperieren des Reifungsmediums in der Reifungskammer, und
iii. mehrere Messeinrichtungen, ausgebildet zur Übermittlung erfasster Messwerte an eine Steuerungs- und/oder Regelungseinrichtung und aufweisend mindestens erste Messeinrichtungen zur Erfassung eines Gewichts der zu reifenden Lebensmittel und zweite Messeinrichtungen zur Erfassung einer Temperatur,
iv. eine Steuerungs- und/oder Regelungseinrichtung, ausgebildet zur Steuerung und/oder Regelung der Be- und Entfeuchtungseinrichtung und/oder zur Steuerung und/oder Regelung der Temperatur innerhalb der Reifungskammer.

Ausführungsformen der Erfindung betreffen eine Vorrichtung zur Reifung von Lebensmitteln, mindestens aufweisend
i. eine verschließbare Reifungskammer,
ii. eine steuer- und/oder regelbare Be- und Entfeuchtungseinrichtung, ausgebildet zum Zu- und Abführen eines Reifungsmediums in die bzw. aus der Reifungskammer und/oder zum Be- und Entfeuchten des Reifungsmediums in der Reifungskammer, und
iii. mehrere Messeinrichtungen, ausgebildet zur Übermittlung erfasster Messwerte an eine Steuerungs- und/oder Regelungseinrichtung und aufweisend mindestens erste Messeinrichtungen zur Erfassung des Gewichts der zu reifenden Lebensmittel und zweite Messeinrichtungen zur Erfassung einer Temperatur,
iv. eine Steuerungs- und/oder Regelungseinrichtung, ausgebildet zur Steuerung und/oder Regelung der Be- und Entfeuchtungseinrichtung und zur Steuerung und/oder Regelung der Temperatur innerhalb der Reifungskammer.

Vorteilhaft ermöglicht eine derartige Vorrichtung eine gesteuerte und/oder geregelte Reifung von Lebensmitteln und die Verringerung von Qualitätsschwankungen, sowie die Einsparung von Ressourcen. Weiterhin vorteilhaft ermöglicht eine derartige Vorrichtung ein vorherberechenbares Ende des Reifungsprozesses.

Die Be- und Entfeuchtungseinrichtung ist derart ausgebildet, dass diese steuer- und/oder regelbar ist. Dazu ist die Be- und Entfeuchtungseinrichtung derart ausgebildet Signale der Steuerungs- und/oder Regelungseinrichtung zu empfangen. Es ist vorteilhaft, wenn eine Verbindung, mittels Kabel oder drahtlos, der Steuerungs- und/oder Regelungseinrichtung und der Be- und Entfeuchtungseinrichtung vorliegt. In Ausführungsformen ist die Be- und Entfeuchtungseinrichtung innerhalb oder außerhalb der Reifungskammer angeordnet. Messeinrichtungen im Sinne der Erfindung meint Sensoren, die geeignet sind, Messwerte, wie Temperatur, Gewicht und Feuchtigkeit zu erfassen und diese an die Steuerungs- und/oder Regelungseinrichtung zu übermitteln. Erste Messeinrichtungen sind in Ausführungsformen als Gewichtssensoren ausgebildet. Zweite Messeinrichtungen sind in Ausführungsformen als Temperatursensoren ausgebildet. Dazu ist es vorteilhaft, wenn die Messeinrichtungen mit der Steuerungs- und/oder Regelungseinrichtung verbunden sind, insbesondere über Kabel oder auch drahtlos.

Eine Steuerungs- und/oder Regelungseinrichtung im Sinne der Erfindung ist derart ausgebildet, Signale der Messeinrichtungen zu empfangen, diese zu verarbeiten und mit den vorgegebenen Gewichts-Zeit-Kurven oder Gewichtsverlust-Zeit-Kurven und/oder Temperatur-Zeit-Kurven zu vergleichen und Signale an die Be- und Entfeuchtungseinrichtung und ggf. an weitere Einrichtungen/Vorrichtungen der erfindungsgemäßen Vorrichtung zu senden, um diese zu steuern und/oder zu regeln. Dazu weist die Steuerungs- und/oder Regelungseinrichtung Eingänge für die Signale der Messeinrichtungen und der Gewichts-Zeit- oder Gewichtsverlust-Zeit bzw. Temperatur-Zeit-Kurven und Ausgänge zur Steuerung und/oder Regelung der Be- und Entfeuchtungseinrichtung und ggf. weiterer Einrichtungen/Vorrichtungen auf.

Die Steuerungs- und Regelungseinrichtung ist als Datenverarbeitungseinrichtung ausgebildet. In Ausführungsformen können Gewichts-Zeit- oder Gewichtsverlust-Zeit und/oder Temperatur-Zeit-Kurven in die Steuerungs- und Regelungseinrichtung eingegeben werden.

In Ausführungsformen weist die Vorrichtung weiterhin eine Temperiervorrichtung zur Temperierung des Reifungsmediums innerhalb der Reifekammer auf, bestehend aus Heiz- und/oder Kühlelementen, vorteilhafterweise sowohl aus Heiz- als auch aus Kühlelementen, und ist geeignet, die Temperatur innerhalb der Reifekammer einzustellen. Vorteilhaft kann damit die Temperatur innerhalb der Reifungskammer variiert werden. In Ausführungsformen ist die Temperiervorrichtung mit der Steuerungs- und/oder Regelungseinrichtung verbunden, insbesondere mittels Kabel oder drahtlos. Vorteilhaft ist die Temperiervorrichtung dadurch steuer- und/oder regelbar.

In Ausführungsformen weist die Vorrichtung mehrere erste Messeinrichtungen zur Erfassung des Gewichts der zu reifenden Lebensmittel an verschiedenen Positionen innerhalb der Reifungskammer auf.

Vorteilhaft wird dadurch die Erfassung des Gewichts mehrerer einzelner Produkte der zu reifenden Lebensmittel an verschiedenen Positionen innerhalb der Reifungskammer ermöglicht. In Ausführungsformen ermöglicht die Steuerungs- und/oder Regelungseinrichtung die Bildung eines Mittelwerts aus den durch mehrere erste Messeinrichtungen an verschiedenen Positionen innerhalb der Reifungskammer erfassten Gewichte einzelner Produkte.

In Ausführungsformen weist die Vorrichtung weiterhin dritte Messeinrichtungen zur Erfassung der Feuchtigkeit auf.

Vorteilhaft wird dabei dadurch die Erfassung der Feuchtigkeit innerhalb der Reifungskammer und/oder des zu- und/oder abgeführten Reifungsmediums erfasst.

In Ausführungsformen weist die Vorrichtung weiterhin mehrere dritte Messeinrichtungen zur Erfassung der Feuchtigkeit auf. Vorteilhaft können dadurch sowohl die Feuchtigkeit innerhalb der Reifungskammer als auch die Feuchtigkeit des zu- und abgeführten Reifungsmedium erfasst werden.

In Ausführungsformen sind die dritten Messeinrichtungen als Feuchtigkeitssensoren ausgebildet.

In Ausführungsformen weist die Vorrichtung weiterhin vierte Messeinrichtungen zur Erfassung einer Geschwindigkeit des Reifungsmediums und eine Vorrichtung zur Umwälzung des Reifungsmediums innerhalb der Reifungskammer auf.

Vorteilhaft wird dadurch die Erfassung der Geschwindigkeit des in der Reifungskammer umgewälzten Reifungsmediums erfasst.

In Ausführungsformen sind die vierten Messeinrichtungen als Strömungssensoren ausgebildet. In Ausführungsformen weist die Vorrichtung mehrere vierte Messeinrichtungen auf. Vorteilhaft wird dadurch die Geschwindigkeit des Reifungsmediums an verschiedenen Positionen innerhalb der Reifungskammer erfasst.

Eine Vorrichtung zur Umwälzung des Reifungsmediums innerhalb der Reifungskammer im Sinne der Erfindung meint eine Vorrichtung, die derart ausgebildet ist, dass die Umwälzung des durch die Be- und Entfeuchtungseinrichtung der Reifungskammer zugeführte Reifungsmedium ermöglicht wird.

In Ausführungsformen ist die Vorrichtung zur Umwälzung des Reifungsmediums innerhalb der Reifungskammer als Ventilator ausgebildet. In Ausführungsformen ist die Vorrichtung zur Umwälzung des Reifungsmediums derart ausgebildet, das Reifungsmedium mit einem relevanten Volumenstrom bei einer Luftgeschwindigkeit von bis zu 2 m / s umzuwälzen. In Ausführungsformen ist die Vorrichtung zur Umwälzung des Reifungsmediums in die Be- und Entfeuchtungseinrichtung integriert.

In Ausführungsformen ist die Steuerungs- und/oder Regelungseinrichtung weiterhin zur Steuerung und/oder Regelung der Vorrichtung zur Umwälzung des Reifungsmediums ausgebildet.

Vorteilhaft wird dadurch die Geschwindigkeit des in der Reifungskammer umgewälzten Reifungsmediums gesteuert und/oder geregelt. Weiterhin vorteilhaft kann durch die Steuerung und/oder Regelung der Geschwindigkeit des in der Reifungskammer umgewälzten Reifungsmediums die Übereinstimmung zwischen Ist- und Soll-Wert der jeweiligen Parameter, wie bspw. Gewicht oder Gewichtsverlust der zu reifenden Lebensmittel und/oder der Temperatur in der Reifungskammer erzielt werden.

In Ausführungsformen ist die Steuerungs- und/oder Regelungseinrichtung ausgebildet, bereitgestellte Wetterdaten zu empfangen und zu verarbeiten, und aus den Wetterdaten Außentemperatur-Zeit-Kurven oder Außenfeuchtigkeits-Zeit-Kurve zu generieren, und
eine Heiz- oder Kühlleistung in Bezug auf das in die Reifekammer zugeführte Reifungsmedium und/oder die Reifekammer selbst, sowie die notwendige Be- oder Entfeuchtungsleistung in Bezug auf das in die Reifekammer zugeführte Reifemedium zu ermitteln, und
die Be- und Entfeuchtungseinrichtung zur Zu- und Abführung des Reifungsmediums und/oder eine Temperiervorrichtung der Reifekammer zu steuern und/oder zu regeln.

Vorteilhaft wird dadurch ein energie- und ressourceneffizienter Betrieb der Vorrichtung der zur Reifung von Lebensmitteln ermöglicht.

In Ausführungsformen werden die Wetterdaten online bereitgestellt und an die Steuerungs- und Regelungseinrichtung übermittelt.

Ein weiterer Aspekt der Erfindung betrifft ein Computerprogrammprodukt mit einem Datenspeicher und darauf gespeicherten, computerlesbaren Anweisungen, die, wenn sie von der Steuerungs- und/oder Regelungseinrichtung gelesen und ausgeführt werden, diese dazu veranlasst, die Schritte: c) und d) des erfindungsgemäßen Verfahrens auszuführen, und einem Bediener die Eingabemöglichkeit für das Vorgeben einer Gewichts-Zeit-Kurve oder Gewichtsverlust-Zeit-Kurve und/oder einer Temperatur-Zeit-Kurve gemäß Schritt a) des erfindungsgemäßen Verfahrens zur Verfügung zu stellen, sowie die durch den Bediener gemachten Eingaben zu verarbeiten.

Vorteilhaft ermöglicht ein derartiges Computerprogrammprodukt die vollautomatische Steuerung und/oder Regelung eines Reifungsprozesses für Lebensmittel ohne durch einen Bediener auszuführende Nachjustierungen während des Reifungsprozesses.

Ein weiterer Aspekt der Erfindung betrifft ein Computerprogrammprodukt mit einem Datenspeicher und darauf gespeicherten, computerlesbaren Anweisungen, die, wenn sie von einer Steuerungs- und/oder Regelungseinrichtung gelesen und ausgeführt werden, diese dazu veranlasst, vor Beginn des Reifeprozesses und/oder während des Reifeprozesses bereitgestellte Wetterdaten zu verarbeiten und aus den Wetterdaten eine Außentemperatur-Zeit-Kurve und/oder eine Außenfeuchtigkeits-Zeit-Kurve zu generieren, und
anhand dieser Außentemperatur-Zeit-Kurve und/oder der Außenfeuchtigkeits-Zeit-Kurve unter Einbeziehung der in Schritt a) vorgegebenen Temperatur-Zeit-Kurve und/oder Feuchtigkeits-Zeit-Kurve eine notwendige Heiz- oder Kühlleistung in Bezug auf das in die Reifekammer zugeführte Reifungsmedium und/oder die Reifekammer selbst, sowie die notwendige Be- oder Entfeuchtungsleistung in Bezug auf das in die Reifekammer zugeführte Reifemedium zu ermitteln, und
in Schritt d) die Be- und Entfeuchtungseinrichtung zur Zu- und Abführung des Reifungsmediums und/oder eine Temperiervorrichtung der Reifekammer zu steuern und/oder zu regeln. Vorteilhaft ermöglicht ein derartiges Computerprogrammprodukt die vollautomatische und energie- und ressourceneffiziente Steuerung und/oder Regelung eines Reifungsprozesses für Lebensmittel unter Einbeziehung der Wetterbedingungen.

Ein weiterer Aspekt der Erfindung betrifft die Verwendung eines erfindungsgemäßen Verfahrens und/oder einer erfindungsgemäßen Vorrichtung und/oder eines erfindungsgemäßen Computerprogrammprodukts zur Reifung von Lebensmitteln.

Die Erfindung ist nicht auf die dargestellten und beschriebenen Ausführungsformen beschränkt, sondern kann auch durch jede beliebige andere Kombination von bestimmten Merkmalen aller insgesamt offenbarten Einzelmerkmale definiert sein, sofern sich die Einzelmerkmale nicht gegenseitig ausschließen, oder eine spezifische Kombination von Einzelmerkmalen nicht explizit ausgeschlossen ist.

### Ausführungsbeispiel

Nachfolgend soll die Erfindung anhand eines Ausführungsbeispiels eingehender erläutert werden. Das Ausführungsbeispiel bezieht sich auf ein Verfahren und eine Vorrichtung zur Reifung von Lebensmitteln und soll dabei die Erfindung beschreiben, ohne diese zu beschränken. Anhand von Zeichnungen wird die Erfindung näher erläutert. Dabei zeigt
**Fig. 1** schematisch eine erfindungsgemäße Vorrichtung,
**Fig. 2** zeigt die Soll- und Ist-Werte der Temperatur-Zeit-Kurve für die Reifung von Lebensmitteln, bspw. dünnkalibriger Rohwürste,
**Fig. 3** zeigt die Soll- und Ist-Werte der Gewichtsverlust-Zeit-Kurve für die Reifung von Lebensmitteln, bspw. dünnkalibriger Rohwürste.

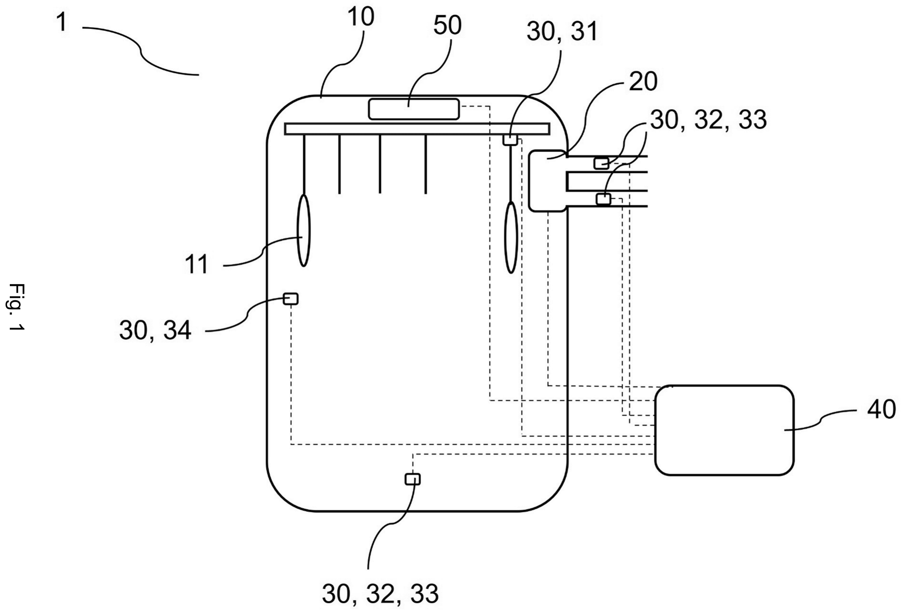

**Figur 1** zeigt eine Vorrichtung 1 zur Reifung von Lebensmitteln 11. Die Vorrichtung 1 zur Reifung von Lebensmitteln 11 weist mindestens eine verschließbare Reifungskammer 10, eine steuer- und/oder regelbare Be- und Entfeuchtungseinrichtung 20, ausgebildet zum Zu- und Abführen eines Reifungsmediums in die bzw. aus der Reifungskammer 10 oder zum Be- und Entfeuchten des Reifungsmediums in der Reifungskammer 10, und mehrere Messeinrichtungen 30, ausgebildet zur Übermittlung erfasster Messwerte an eine Regelungs- und/oder Steuerungseinrichtung 40. Die Messeinrichtungen 30 weisen mindestens erste Messeinrichtungen zur Erfassung des Gewichts 31 der zu reifenden Lebensmittel 11 und zweite Messeinrichtungen zur Erfassung einer Temperatur 32 bspw. innerhalb der Reifungskammer 10 und/oder der Temperatur des durch die Be- und Entfeuchtungseinrichtung 20 zu- und abgeführten Reifungsmediums auf. Die Steuerungs- und/oder Regelungseinrichtung 40 ist zur Steuerung und/oder Regelung der Be- und Entfeuchtungseinrichtung 20 und zur Steuerung und/oder Regelung der Temperatur innerhalb der Reifungskammer 10 ausgebildet.

Die Vorrichtung 1 zur Reifung von Lebensmitteln 11 kann in Ausführungsformen weiterhin dritte Messeinrichtungen 33 zur Erfassung einer Feuchtigkeit des durch die Be- und Entfeuchtungseinrichtung 20 in die Reifungskammer 10 zugeführten und aus der Reifungskammer 10 abgeführten Reifungsmedium und vierte Messeinrichtungen zur Erfassung einer Geschwindigkeit des in der Reifungskammer 10 umgewälzten Reifungsmediums und eine Vorrichtung zur Umwälzung des Reifungsmediums in der Reifungskammer 50 aufweisen. Die Steuerungs- und /oder Regelungseinrichtung 40 ist in Ausführungsformen weiterhin zur Steuerung und/oder Regelung der Vorrichtung zur Umwälzung des Reifungsmediums 50 ausgebildet.

In einem Verfahren zur Reifung von Lebensmitteln werden in Schritt a) die zu reifenden Lebensmittel 11, bspw. dünnkalibrige Rohwürste, in einer Reifungskammer 10 bereitgestellt. In einem Schritt a) wird weiterhin eine Gewichts-Zeit-Kurve, eine Gewichtsverlust-Zeit-Kurve und/oder eine Temperatur-Zeit-Kurve eines durchzuführenden Reifungsprozesses vorgegeben. Vorteilhaft werden die Kurven jeweils als stetige Funktion, insbesondere als polynomische Funktion 4. Ordnung vorgegeben.

Das Gewicht der zu reifenden Lebensmittel 11 über die Zeit wird zumindest teilweise mittels Messeinrichtungen 30, 31 in Schritt b) erfasst, d.h. das Gewicht einzelner Produkte der zu reifenden Lebensmittel 11 wird erfasst. Aus dem erfassten Gewicht wird der Gewichtsverlust in Prozent des Ausgangsgewichts bestimmt. Dies erfolgt durch die Steuerungs- und Regelungseinrichtung 40. Weiterhin wird die Temperatur innerhalb der Reifungskammer 11, bspw. mittels Messeinrichtungen 30, 32 in Schritt b) erfasst. Die durch die Messeinrichtungen 30, 31, 32 erfassten Messwerte werden in Schritt b) an eine Steuerungs- und/oder Regelungseinrichtung 40 übermittelt.

In der Steuerungs- und Regelungseinrichtung 40 wird in Schritt c) das erfasste Gewicht mit einer vorgegebenen Gewichtsverlust-Zeit-Kurve und die erfasste Temperatur mit einer vorgegebenen Temperatur-Zeit-Kurve verglichen. Dabei werden Abweichungen zwischen dem erfassten Gewicht oder dem ermittelten Gewichtsverlust und/oder der erfassten Temperatur und der vorgebeben Gewichtsverlust-Zeit-Kurve und der vorgegebenen Temperatur-Zeit-Kurve festgestellt. Anhand der Abweichungen zwischen dem erfassten Gewicht und der vorgegebenen Gewichtsverlust-Zeit-Kurve wird in Schritt d) durch die Steuerungs- und Regelungseinrichtung 40 eine Be- und Entfeuchtungseinrichtung 20 und anhand der Abweichungen zwischen der erfassten Temperatur und der vorgegebenen Temperatur-Zeit-Kurve die Temperatur innerhalb der Reifungskammer 10 gesteuert und/oder geregelt. Dabei wird die Temperatur eines Aktors, bspw. eines Peltier-Elementes, der Be- und Entfeuchtungseinrichtung 20 gesteuert und/oder geregelt, und damit die relative Feuchtigkeit des Reifungsmediums innerhalb der Reifungskammer 10 verändert und/oder mindestens ein Aktor zur Beeinflussung der Temperatur innerhalb der Reifungskammer gesteuert und/oder geregelt, insbesondere ein Heiz- und/oder Kühlelement, um die Temperatur innerhalb der Reifungskammer 10 zu verändern.

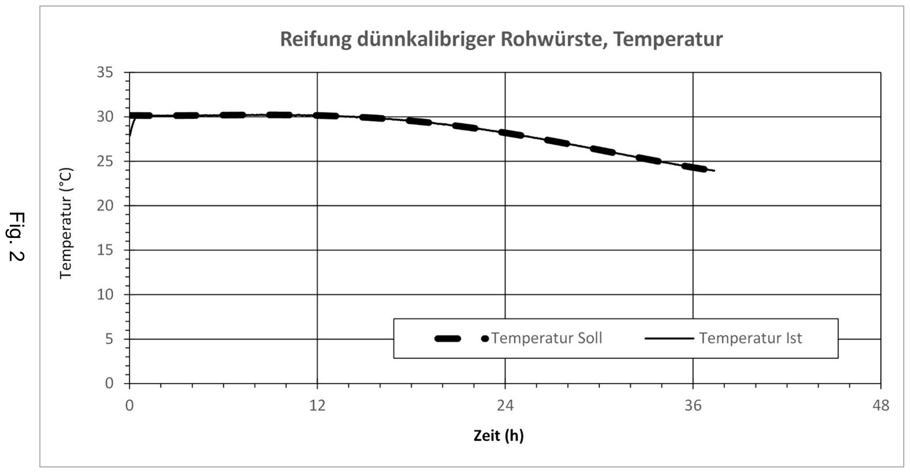

Fig. 2 zeigt dabei als gestrichelte Linie die vorgegebene Temperatur-Zeit-Kurve für die Reifung der dünnkalibrigen Rohwürste. Dabei ist die Temperatur innerhalb der Reifungskammer als Funktion der Zeit (auch Reifezeit) dargestellt. Die durchgezogene Linie zeigt den Ist-Verlauf der Temperatur über die (Reife)-Zeit. Deutlich zu erkennen ist, dass die Ist-Werte des Gewichtsverlusts nahezu perfekt auf die vorgegebene Gewichtsverlust-Zeit-Kurve gesteuert und/oder geregelt werden und keinerlei Abweichungen vorliegen.

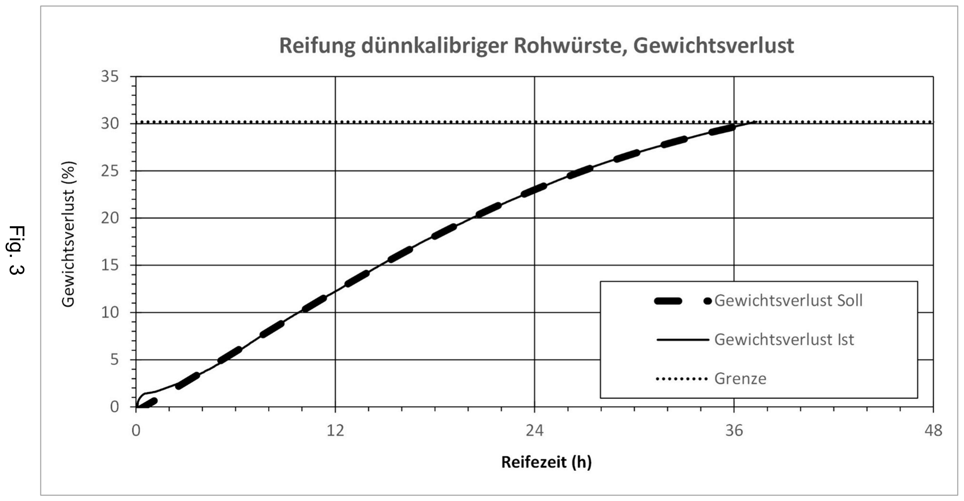

Fig. 3 zeigt als gestrichelte Linie die vorgegebene Gewichtsverlust-Zeit-Kurve für die Reifung der dünnkalibrigen Rohwürste. Die durchgezogene Linie zeigt den Ist-Verlauf des Gewichtsverlusts, der aus dem erfassten Gewicht bestimmt wird, über die (Reife)-Zeit. Zu Beginn des dargestellten Reifeprozesses sind Abweichungen zwischen den Ist- und Sollwerten des Gewichtsverlusts erkennbar. Das Reifungsmedium Luft ist zu diesem Zeitpunkt noch relativ trocken, und die dünnkalibrigen Rohwürste verlieren sehr schnell Feuchtigkeit und damit Masse, was zu einem Überschwingen der Ist-Werte des Gewichtsverlusts gegenüber der vorgegebenen Gewichtsverlust-Zeit-Kurve führt, die Be- und Entfeuchtungseinrichtung 20 ist deaktiviert. Die Luft als Reifungsmedium in der Reifungskammer 10 ist nach ca. 2 Stunden nahezu gesättigt mit der von der Rohwürsten abgegeben Feuchtigkeit, wodurch die Feuchtigkeitsabgabe von der Rohwurstoberfläche an die umgebende Luft stark behindert wird und die Gewichtsabnahme nahezu stagniert. Die Steuerungs- und/oder Regelungseinrichtung 40 aktiviert aufgrund der Abweichungen zwischen den Ist- und Sollwerten die Be- und Entfeuchtungseinrichtung 20 und steuert und/oder regelt deren Leistung zur Abführung der Feuchtigkeit aus der Reifungskammer 10, was zu einem Angleich der Ist-Werte des Gewichtsverlusts an die vorgegebene Gewichtsverlust-Zeitkurve nach ungefähr 3,5 Stunden Reifung führt. Durch die Steuerung und/oder Regelung der Be- und Entfeuchtungseinrichtung erfolgt die Reifung bzw. Gewichtsabnahme der dünnkalibrigen Rohwürste wie durch die Gewichtsverlust-Zeit-Kurve vorgegeben und das Zielgewicht, siehe gepunktete Linie in Fig. 3, wird wie vorauskalkuliert genau nach 37 Stunden und 20 Minuten erreicht.

In Ausführungsformen des Verfahrens wird weiterhin die Feuchtigkeit des durch die Be- und Entfeuchtungseinrichtung 20 in die Reifungskammer 10 zugeführten und aus der Reifungskammer 10 abgeführten Reifungsmediums durch dritte Messeinrichtungen 30, 33 erfasst und die erfassten Werte an die Steuerungs- und/oder Regelungseinrichtung 40 übermittelt. Auch kann mittels zweiter Messeinrichtungen 30, 32 die Temperatur des durch die Be- und Entfeuchtungseinrichtung 20 in die Reifungskammer 10 zugeführten und aus der Reifungskammer 10 abgeführten Reifungsmediums erfasst und die erfassten Werte an die Steuerungs- und/oder Regelungseinrichtung 40 übermittelt.

In Ausführungsformen des Verfahrens wird die Geschwindigkeit des in der Reifungskammer 10 umgewälzten Reifungsmediums durch vierte Messeinrichtungen 30, 34 erfasst und an die Steuerungs- und/oder Regelungseinrichtung 40 übermittelt. Die Steuerungs- und/oder Regelungseinrichtung 40 steuert und/oder regelt in Ausführungsformen eine Vorrichtung zur Umwälzung des Reifungsmediums 50 in der Reifungskammer 10.

### Bezugszeichen

- 1: Vorrichtung zur Reifung von Lebensmitteln
- 10: Reifungskammer
- 11: Zu reifende Lebensmittel
- 20: Be- und Entfeuchtungseinrichtung
- 30: Messeinrichtungen
- 31: Erste Messeinrichtungen zur Erfassung des Gewichts
- 32: Zweite Messeinrichtungen zur Erfassung einer Temperatur
- 33: Dritte Messeinrichtungen zur Erfassung der Feuchtigkeit
- 34: Vierte Messeinrichtungen zur Erfassung einer Geschwindigkeit des Reifungsmediums
- 40: Steuerungs- und/oder Regelungseinrichtung
- 50: Vorrichtung zur Umwälzung des Reifungsmediums

## Patentansprüche

1. Verfahren zur Reifung von Lebensmitteln, umfassend mindestens die Schritte:
a) Bereitstellen zu reifender Lebensmittel in einer Reifungskammer und Vorgeben einer Gewichts-Zeit-Kurve, einer Gewichtsverlust-Zeit-Kurve und/oder einer Temperatur-Zeit-Kurve eines durchzuführenden Reifungsprozesses, und
b) Erfassen zumindest teilweise eines Gewichts der zu reifenden Lebensmittel über die Zeit und/oder einer Temperatur innerhalb der Reifungskammer und deren Übermittlung an eine Steuerungs- und/oder Regelungseinrichtung, und
c) Vergleichen des erfassten Gewichts mit der vorgegebenen Gewichts-Zeit-Kurve oder Gewichtsverlust-Zeit-Kurve und/oder der erfassten Temperatur mit der vorgegebenen Temperatur-Zeit-Kurve, um Abweichungen zwischen dem erfassten Gewicht und/oder der erfassten Temperatur und der vorgegebenen Gewichts-Zeit-Kurve, Gewichtsverlust-Zeit-Kurve und/oder Temperatur-Zeit-Kurve festzustellen, und
d) Steuern und/oder Regeln einer Be- und Entfeuchtungseinrichtung zur Zu- und Abführung eines Reifungsmediums anhand der Abweichungen zwischen dem erfassten Gewicht und der vorgegebenen Gewichts-Zeit-Kurve oder Gewichtsverlust-Zeit-Kurve und/oder der Temperatur innerhalb der Reifungskammer anhand der Abweichungen zwischen der erfassten Temperatur und der vorgegebenen Temperatur-Zeit-Kurve .

2. Verfahren nach Anspruch 1, **dadurch gekennzeichnet, dass** in Schritt b) das Gewicht der zu reifenden Lebensmittel an verschiedenen Positionen innerhalb der Reifungskammer erfasst wird.

3. Verfahren nach einem der Ansprüche 1 oder 2, **dadurch gekennzeichnet, dass** in Schritt b) weiterhin Parameter der Be- und Entfeuchtungseinrichtung und/oder der Reifungskammer erfasst und an die Steuerungs- und Regelungseinrichtung übermittelt werden, wobei bevorzugt die Temperatur und Feuchtigkeit des durch die Be- und Entfeuchtungseinrichtung zu- und abgeführten Reifungsmediums und/oder die Feuchtigkeit innerhalb der Reifungskammer erfasst werden.

4. Verfahren nach einem der Ansprüche 1 bis 3, **dadurch gekennzeichnet, dass** in Schritt b) weiterhin eine Geschwindigkeit des Reifungsmediums innerhalb der Reifungskammer erfasst und an die Steuerungs- und/oder Regelungseinrichtung übermittelt wird, und in Schritt d) die Geschwindigkeit des Reifungsmediums innerhalb der Reifungskammer gesteuert und/oder geregelt wird.

5. Verfahren nach einem der Ansprüche 1 bis 4, **dadurch gekennzeichnet, dass** in Schritt a) eine stetige Funktion, insbesondere eine polynomische Funktion 4. Ordnung als Gewichts-Zeit-Kurve oder Gewichtsverlust-Zeit-Kurve und/oder als Temperatur-Zeit-Kurve vorgegeben wird, und/oder die vorgegebene Gewichts-Zeit-Kurve oder Gewichtsverlust-Zeit-Kurve und/oder Temperatur-Zeit-Kurve gestaucht oder gestreckt wird.

6. Verfahren nach einem der Ansprüche 1 bis 5, **dadurch gekennzeichnet, dass** vor Beginn des Reifeprozesses und/oder während des Reifeprozesses Wetterdaten bereitgestellt und aus den Wetterdaten eine Außentemperatur-zeit-Kurve und/oder eine Außenfeuchtigkeits-Zeit-Kurve generiert werden, und
anhand dieser Außentemperatur-Zeit-Kurve und/oder der Außenfeuchtigkeits-Zeit-Kurve unter Einbeziehung der in Schritt a) vorgegebenen Temperatur-Zeit-Kurve und/oder Feuchtigkeits-Zeit-Kurve eine notwendige Heiz- oder Kühlleistung in Bezug auf das in die Reifekammer zugeführte Reifungsmedium und/oder die Reifekammer selbst, sowie die notwendige Be- oder Entfeuchtungsleistung in Bezug auf das in die Reifekammer zugeführte Reifemedium ermittelt, und
die Be- und Entfeuchtungseinrichtung zur Zu- und Abführung des Reifungsmediums und/oder eine Temperiervorrichtung der Reifekammer gesteuert werden.

7. Vorrichtung zur Reifung von Lebensmitteln, mindestens aufweisend
i. eine verschließbare Reifungskammer,
ii. eine steuer- und/oder regelbare Be- und Entfeuchtungseinrichtung, ausgebildet zum Zu- und Abführen eines Reifungsmediums in die und aus der Reifungskammer und/oder zum Be- und Entfeuchten und Temperieren des Reifungsmediums in der Reifungskammer, und,
iii. mehrere Messeinrichtungen, ausgebildet zur Übermittlung erfasster Messwerte an eine Steuerungs- und/oder Regelungseinrichtung und aufweisend mindestens erste Messeinrichtungen zur Erfassung eines Gewichts der zu reifenden Lebensmittel und zweite Messeinrichtungen zur Erfassung einer Temperatur,
iv. die Steuerungs- und/oder Regelungseinrichtung, ausgebildet zur Steuerung und/oder Regelung der Be- und Entfeuchtungseinrichtung und/oder zur Steuerung und/oder Regelung der Temperatur innerhalb der Reifungskammer.

8. Vorrichtung nach Anspruch 7, **dadurch gekennzeichnet, dass** die Vorrichtung mehrere erste Messeinrichtungen zur Erfassung des Gewichts der zu reifenden Lebensmittel an verschiedenen Positionen innerhalb der Reifungskammer aufweist.

9. Vorrichtung nach einem der Ansprüche 7 oder 8, **dadurch gekennzeichnet, dass** die Vorrichtung weiterhin dritte Messeinrichtungen zur Erfassung der Feuchtigkeit aufweist.

10. Vorrichtung nach einem der Ansprüche 7 bis 9, **dadurch gekennzeichnet, dass** die Vorrichtung weiterhin vierte Messeinrichtungen zur Erfassung einer Geschwindigkeit des Reifungsmediums und eine Vorrichtung zur Umwälzung des Reifungsmediums innerhalb der Reifungskammer aufweist.

11. Vorrichtung nach Anspruch 10, **dadurch gekennzeichnet, dass** die Steuerungs- und/oder Regelungseinrichtung weiterhin zur Steuerung und/oder Regelung der Vorrichtung zur Umwälzung des Reifungsmediums ausgebildet ist.

12. Vorrichtung nach einem der Ansprüche 7 bis 11, **dadurch gekennzeichnet, dass** die Steuerungs- und/oder Regelungseinrichtung ausgebildet ist, bereitgestellte Wetterdaten zu empfangen und zu verarbeiten, und aus den Wetterdaten Außentemperatur-Zeit-Kurven und/oder Außenfeuchtigkeits-Zeit-Kurven zu generieren, und
eine Heiz- oder Kühlleistung in Bezug auf das in die Reifekammer zugeführte Reifungsmedium und/oder die Reifekammer selbst, sowie die notwendige Be- oder Entfeuchtungsleistung in Bezug auf das in die Reifekammer zugeführte Reifemedium zu ermitteln, und
die Be- und Entfeuchtungseinrichtung zur Zu- und Abführung des Reifungsmediums und/oder eine Temperiervorrichtung der Reifekammer zu steuern und/oder zu regeln.

13. Computerprogrammprodukt mit einem Datenspeicher und darauf gespeicherten, computerlesbaren Anweisungen, die, wenn sie von der Steuerungs- und/oder Regelungseinrichtung gelesen und ausgeführt werden, diese dazu veranlasst, die Schritte:
c) und d) nach einem der Ansprüche 1 bis 6 auszuführen,
und einem Bediener die Eingabemöglichkeit für das Vorgeben einer Gewichts-Zeit-Kurve oder Gewichtsverlust-Zeit-Kurve und/oder einer Temperatur-Zeit-Kurve gemäß Schritt a) nach einem der Ansprüche 1 bis 8 zur Verfügung zu stellen, sowie die durch den Bediener gemachten Eingaben zu verarbeiten.

14. Computerprogrammprodukt nach Anspruch 13 mit einem Datenspeicher und darauf gespeicherten, computerlesbaren Anweisungen, die, wenn sie von einer Steuerungs- und/oder Regelungseinrichtung gelesen und ausgeführt werden, diese dazu veranlasst, vor Beginn des Reifeprozesses und/oder während des Reifeprozesses bereitgestellte Wetterdaten zu verarbeiten und aus den Wetterdaten eine Außentemperatur-Zeit-Kurve und/oder eine Außenfeuchtigkeits-Zeit-Kurve zu generieren, und
anhand dieser Außentemperatur-Zeit-Kurve und/oder der Außenfeuchtigkeits-Zeit-Kurve unter Einbeziehung der in Schritt a) vorgegebenen Temperatur-Zeit-Kurve und/oder Feuchtigkeits-Zeit-Kurve eine notwendige Heiz- oder Kühlleistung in Bezug auf das in die Reifekammer zugeführte Reifungsmedium und/oder die Reifekammer selbst, sowie die notwendige Be- oder Entfeuchtungsleistung in Bezug auf das in die Reifekammer zugeführte Reifemedium zu ermitteln, und
in Schritt d) die Be- und Entfeuchtungseinrichtung zur Zu- und Abführung des Reifungsmediums und/oder eine Temperiervorrichtung der Reifekammer zu steuern und/oder zu regeln.

15. Verwendung eines Verfahrens nach einem der Ansprüche 1 bis 6 und/oder einer Vorrichtung nach einem der Ansprüche 7 bis 12 und/oder eines Computerprogrammprodukts nach Anspruch 13 oder 14 zur Reifung von Lebensmitteln.
